(19) Europäisches Patentamt
European Patent Office
Office européen des brevets

(11) **EP 3 201 725 B1**

(12) **FASCICULE DE BREVET EUROPEEN**

(45) Date de publication et mention
de la délivrance du brevet:
**04.03.2020 Bulletin 2020/10**

(21) Numéro de dépôt: **15771924.6**

(22) Date de dépôt: **29.09.2015**

(51) Int Cl.:
*G06F 3/01* *(2006.01)* *H01H 19/00* *(2006.01)*
*H01H 3/00* *(2006.01)* *F16F 9/53* *(2006.01)*

(86) Numéro de dépôt international:
**PCT/EP2015/072316**

(87) Numéro de publication internationale:
**WO 2016/050717 (07.04.2016 Gazette 2016/14)**

(54) **INTERFACE HAPTIQUE À RENDU HAPTIQUE AMÉLIORÉ**

HAPTISCHE SCHNITTSTELLE MIT VERBESSERTEM HAPTISCHEM RENDERING

HAPTIC INTERFACE WITH IMPROVED HAPTIC RENDERING

(84) Etats contractants désignés:
**AL AT BE BG CH CY CZ DE DK EE ES FI FR GB
GR HR HU IE IS IT LI LT LU LV MC MK MT NL NO
PL PT RO RS SE SI SK SM TR**

(30) Priorité: **29.09.2014 FR 1459187**

(43) Date de publication de la demande:
**09.08.2017 Bulletin 2017/32**

(73) Titulaire: **Commissariat à l'Énergie Atomique
et aux Énergies Alternatives
75015 Paris (FR)**

(72) Inventeurs:
• **HAFEZ, Moustapha**
  **F-91120 Palaiseau (FR)**
• **LOZADA, José**
  **F-91120 Palaiseau (FR)**
• **ECK, Laurent**
  **F-91120 Palaiseau (FR)**
• **CHANGEON, Gwenael**
  **F-91120 Palaiseau (FR)**

(74) Mandataire: **Brevalex
95, rue d'Amsterdam
75378 Paris Cedex 8 (FR)**

(56) Documents cités:
WO-A2-2013/157205    FR-A1- 2 930 655
US-A- 5 555 894    US-A1- 2012 267 221

**Description**

**DOMAINE TECHNIQUE ET ÉTAT DE LA TECHNIQUE ANTÉRIEURE**

La présente invention se rapporte à une interface haptique à rendu haptique amélioré.

Une interface haptique peut prendre la forme d'un bouton rotatif manipulé par un utilisateur, dans ce cas l'interface oppose un couple résistant à l'utilisateur en fonction de la position angulaire du bouton d'actionnement et du déplacement appliqué par l'utilisateur, permettant ainsi de définir des motifs haptiques qui seront ressentis par l'utilisateur lorsqu'il tourne le bouton.

Le couple résistant peut être transmis au bouton par l'intermédiaire d'un fluide magnéto-rhéologique dont la viscosité apparente est modifiée par l'application d'un champ magnétique afin de définir les motifs haptiques prédéfinis. Dans cette configuration où le ressenti haptique est une fonction angulaire de la position du bouton, la production de certains motifs haptiques est entachée d'effets indésirables qui nuisent à la qualité haptique perçue.

Par exemple dans le cas où l'interface doit reproduire une butée, il est nécessaire de générer un couple résistant important lorsque le bouton rentre dans la zone angulaire définie comme butée haptique. Lorsque le système est dans cette configuration, il se retrouve bloqué dans cet état stable. L'utilisateur doit alors effectuer un effort pour tourner le bouton en sens inverse, il ressent une sensation de collage et doit donc se « décoller » de la butée jusqu'à sortir de la zone angulaire définie comme butée haptique.

Le document US2006/0280575 décrit un exemple d'interface haptique à fluide magnéto-rhéologique dans lequel un ressort est prévu dans l'arbre rotatif de l'interface, ce qui introduit un mouvement relatif entre le bouton et l'élément en contact avec le fluide magnéto-rhéologique. Ainsi lorsque l'utilisateur déplace le bouton en sens inverse alors qu'il est en butée le mouvement relatif dû au ressort permet un déplacement de l'arbre qui peut alors être détecté par son capteur de position angulaire. Cependant le choix de la raideur du ressort est complexe, en effet si le ressort est trop raide, l'utilisateur doit appliquer un effort important pour s'opposer à la raideur du ressort jusqu'à provoquer un déplacement conséquent détectable par le capteur de position angulaire. A l'inverse, si la raideur du ressort est trop faible, l'utilisateur va ressentir sa raideur au lieu de ressentir une butée (raideur infinie théoriquement), la sensation de butée produite n'est alors pas de bonne qualité.

Plus généralement la simulation d'une sensation lorsque le motif haptique dans un sens est différent du motif haptique dans le sens opposé peut générer cette sensation de collage qui nuit au bon rendu haptique de l'interface.

La reproduction d'un motif haptique, par exemple d'une butée, a également pour inconvénient de nécessiter une consommation électrique permanente, du fait de l'alimentation de la bobine pour créer le champ magnétique modifiant la viscosité apparente afin de générer le motif haptique souhaité, et ceci même si l'utilisateur a relâché le bouton, puisque le fait que l'utilisateur ait relâché le bouton n'est pas détecté. « au moins inférieure à une valeur en dessus de laquelle on considère que le déplacement du bouton est imperceptible ».

Le document FR2930655 décrit une interface haptique selon le préambule de la revendication 1, l'interface haptique étant à fluide magnétorhéologique et mettant en œuvre un élément d'interaction avec le fluide magnétorhéologique en forme de jupe, et des moyens de génération d'un champ magnétique variable comportant une bobine. L'interface peut comporter des capteurs d'effort ou de couple pour mesurer l'effort ou le couple appliqué au bouton, et adapter la résistance à la valeur de cet effort ou de couple.

**EXPOSÉ DE L'INVENTION**

C'est par conséquent un but de la présente invention d'offrir une interface haptique offrant un rendu haptique amélioré, notamment dans le cas où le motif haptique varie entre un premier sens de déplacement et un deuxième sens opposé au premier sens de déplacement, par exemple dans le cas de la reproduction d'une butée.

Le but précédemment énoncé est atteint par une interface haptique selon la revendication 1 et comportant un organe d'interaction avec l'utilisateur et un organe d'interaction avec un fluide dont la viscosité varie en fonction d'un stimulus de contrôle, les deux organes étant solidaires au moins en rotation ou au moins en translation, des moyens pour générer un stimulus variable, un capteur de mesure de la position courante de l'élément d'interaction avec l'utilisateur, et des moyens pour détecter l'intention d'action de l'utilisateur avant que le mouvement appliqué à l'élément d'interaction avec l'utilisateur ne devienne perceptible pour l'utilisateur et pour le capteur de mesure de position afin de déterminer le sens de déplacement que l'utilisateur à l'intention d'appliquer à l'élément d'interaction avec l'utilisateur.

Grâce à l'invention, on dispose d'une connaissance au plus tôt du sens dans lequel l'élément d'interaction avec l'utilisateur va se déplacer, permettant de commander les moyens de génération de champ magnétique en conséquence. Dans le cas où l'élément d'interaction avec l'utilisateur est dans une zone de butée et le sens de déplacement souhaité par l'utilisateur correspond à celui de la butée, le champ magnétique est maintenu ou réappliqué. Si le sens de déplacement souhaité par l'utilisateur est tel que le bouton sort de la zone de butée, le champ magnétique est réduit ou supprimé.

Il est à noter qu'un capteur de position n'est pas suffisamment sensible pour détecter l'intention de l'utilisateur.

L'invention permet de réduire, voire supprimer un retard spatial et temporel dans la commande de l'interface en anticipant l'action de déplacement de l'utilisateur.

Dans le cas d'un fluide magnéto-rhéologique, la consommation électrique peut être réduite puisqu'il est possible de déterminer si l'utilisateur maintient une action ou non sur l'interface grâce à l'invention, il n'est plus nécessaire d'appliquer un champ magnétique permanent. Le même avantage existe lorsqu'un fluide électro-rhéologique est mis en œuvre.

La détection de l'intention de l'utilisateur est réalisée en estimant la force exercée sur l'élément en interaction avec l'utilisateur grâce à la déformation d'un élément de l'interface. Par exemple dans le cas d'une interface haptique rotative, un couple de torsion peut être détecté sur l'arbre rotatif reliant les éléments d'interaction, sur l'élément d'interaction avec le fluide ou plus avantageusement au moyen d'une pièce supplémentaire liée à la fois aux éléments reproduisant les motifs haptiques et au châssis et dont on mesure la déformation. La déformation est par exemple détectée par un ou des capteurs d'effort permettant de déterminer le sens du couple appliqué à l'interface haptique et si le couple de torsion appliqué dépasse ou non un seuil donné au-delà duquel on considère que l'utilisateur a effectivement l'intention de manipuler l'interface haptique.

Le traitement conjoint des informations issues du capteur de position courante et des moyens de détermination de l'intention de l'utilisateur permet d'appliquer un motif haptique qui est dépendant du sens de l'intention d'action de l'utilisateur, lorsqu'il n'y a pas de déplacement, ou du signe de la vitesse de rotation, lorsqu'il y a un déplacement. Une telle gestion des motifs haptiques permet de les associer à un sens privilégié de déplacement de l'élément d'interaction avec l'utilisateur du bouton sans que l'utilisateur ne ressente un effort parasite significatif lors du changement de sens.

De manière très avantageuse, l'interface peut comporter des moyens aptes à moduler le stimulus variable appliqué au fluide en fonction de la position courante de l'élément d'interaction avec l'utilisateur et de la vitesse d'actionnement de l'élément d'interaction avec l'utilisateur. En appliquant un motif haptique qui est dépendant de la vitesse d'actionnement de l'élément d'interaction avec l'utilisateur, il est possible de moduler, par exemple d'accentuer le ressenti haptique en fonction de la vitesse d'actionnement de l'élément d'interaction avec l'utilisateur. Cette modulation peut porter sur des modifications d'amplitude ou de forme du motif. Ainsi en tenant compte de la vitesse d'actionnement dans la sélection de la valeur de motif haptique, la maîtrise du ressenti haptique est amélioré. On évite par exemple une diminution du ressenti haptique lorsque la vitesse d'actionnement est élevée.

La présente invention a alors pour objet une interface haptique comportant :

- un élément d'interaction avec un utilisateur apte à se déplacer dans un premier sens et dans un deuxième sens,
- un élément d'interaction avec un fluide dont la viscosité varie en fonction d'un stimulus extérieur, l'élément d'interaction avec le fluide étant solidaire au moins en translation ou au moins en rotation de l'élément d'interaction avec l'utilisateur,
- des moyens de mesure d'une position courante de l'élément d'interaction avec l'utilisateur,
- un frein comportant un fluide dont la viscosité apparente varie en fonction d'un stimulus extérieur et un système de génération dudit stimulus sur commande dans ledit fluide, l'élément d'interaction avec le fluide étant disposé dans le fluide,
- une unité de commande apte à générer des ordres audit système de génération dudit stimulus de modifier la valeur du stimulus, et
- des moyens pour détecter le couple exercé par un utilisateur sur l'élément d'interaction avec l'utilisateur, dans le cas d'un élément d'interaction avec l'utilisateur mobile en rotation, afin de connaître le sens du couple et si le couple est supérieur à une valeur donnée pour un sens donné, l'unité de commande commandant le système de génération dudit stimulus sur la base des informations obtenues sur le couple au moins lorsqu'une vitesse nulle ou faible de l'élément d'interaction avec l'utilisateur est détectée, ou
- des moyens pour détecter l'effort exercé par un utilisateur sur l'élément d'interaction avec l'utilisateur, dans le cas d'un élément d'interaction avec l'utilisateur mobile en translation, afin de connaître le sens de la force et si la force est supérieure à une valeur donnée pour un sens donné, l'unité de commande commandant le système de génération dudit stimulus sur la base des informations obtenues sur la force au moins lorsqu'une vitesse nulle ou faible de l'élément d'interaction avec l'utilisateur est détectée.

Dans un exemple de réalisation, les moyens pour détecter le couple ou la force appliqué par l'utilisateur sur l'élément d'interaction avec l'utilisateur comportent au moins un capteur d'effort, préférentiellement monté en précontrainte. De manière préférée, les moyens pour détecter le couple ou la force appliqué par l'utilisateur sur l'élément d'interaction avec l'utilisateur comportent deux capteurs d'effort, disposés de sorte qu'un capteur d'effort détecte un effort lorsque le couple ou la force est appliquée dans le premier sens et l'autre capteur d'effort détecte un effort lorsque le couple ou la force est appliqué dans le deuxième sens.

Dans un autre exemple de réalisation, les moyens pour détecter le couple ou la force appliqué par l'utilisateur sur l'élément d'interaction avec l'utilisateur comportent au moins un capteur de la déformation provoquée par le couple ou la force à l'un des éléments de l'interface haptique. De manière préférée, les moyens pour détecter le couple ou la force appliqué par l'utilisateur sur l'élément d'interaction avec l'utilisateur comportent deux capteurs de la déformation provoquée par le couple ou la force à l'un des éléments de l'interface haptique, lesdits capteurs de déformation étant disposés de sorte qu'un capteur de déformation détecte la déformation lorsque le couple ou la force est appliqué dans le premier sens et l'autre capteur de déformation détecte une déformation lorsque le couple ou la force est appliqué dans le deuxième sens.

Par exemple, l'interface haptique peut comporter un corps d'épreuve qui est disposé de sorte à être déformé par le couple ou la force appliqué par l'utilisateur sur l'élément d'interaction avec l'utilisateur, les moyens pour détecter le couple ou la force étant en contact avec ledit corps d'épreuve.

De préférence, le corps d'épreuve est en un matériau tel que sa déformation n'est pas perceptible par l'utilisateur.

Le ou les capteurs d'effort peut ou peuvent être en contact ponctuel avec le corps d'épreuve.

L'interface haptique peut comporter un bâti sur lequel sont fixés des moyens pour détecter le couple ou la force, le corps d'épreuve étant d'une part solidaire du frein et d'autre part solidaire du bâti de sorte à être déformer lorsqu'un couple ou une force est appliquée à l'élément d'interaction avec l'utilisateur.

Le ou les capteurs d'effort ou le ou les capteurs de déformation sont avantageusement disposés par rapport au corps d'épreuve de sorte que la sensibilité de mesure des capteurs d'effort vis-à-vis du couple ou de la force soit maximisée.

Dans un exemple de réalisation, l'élément d'interaction avec l'utilisateur est mobile en rotation et est solidaire d'un arbre de rotation d'axe longitudinal duquel est solidaire en rotation l'élément d'interaction avec le fluide, le couple de rotation étant déterminé. Le frein peut alors comporter un boîtier cylindrique de section circulaire coaxial à l'axe de l'arbre de rotation, le corps d'épreuve étant cylindrique de section circulaire coaxial et disposé autour du boîtier de manière coaxial et dans lequel le ou les capteurs d'effort ou le ou les capteurs de déformation sont disposés sur un cercle centré sur l'axe de rotation de l'arbre de rotation.

Dans autre exemple de réalisation, l'élément d'interaction avec l'utilisateur est mobile en translation.

Par exemple, le fluide est un fluide magnéto-rhéologique, le stimulus étant un champ magnétique.

La présente invention a également pour objet un procédé de commande d'une interface haptique selon l'invention, comportant les étapes:

- détermination de la vitesse de l'élément d'interaction avec l'utilisateur à partir des informations fournies pas les moyens de mesure de la position courante sur de l'élément d'interaction avec l'utilisateur,
- détermination du couple ou d'une force appliquée à l'élément d'interaction avec l'utilisateur,
- détermination de la position courante de l'élément d'interaction avec l'utilisateur,
- si la vitesse est supérieure à une vitesse donnée, le sens de rotation est celui donné par la vitesse et le système de génération d'un stimulus est commandé de sorte à appliquer le motif haptique enregistré pour la position courante déterminée et pour le sens de rotation déterminé,
- si la vitesse est inférieure à une vitesse donnée et si le couple ou la force est supérieur à une valeur seuil positive ou inférieur à une valeur seuil négative, le sens de déplacement de l'élément d'interaction avec l'utilisateur est déduit du couple ou de la force déterminé, et le système de génération d'un stimulus est commandé de sorte à appliquer un stimulus en fonction du motif haptique enregistré pour cette position courante et pour le sens de déplacement déduit.

Dans le cas où le couple ou la force déterminé est inférieur à une valeur donnée, on peut n'appliquer aucun stimulus au fluide.

Dans un exemple de réalisation avantageux dans lequel sont prévus des moyens aptes à moduler le stimulus variable appliqué au fluide en fonction de la position courante de l'élément d'interaction avec l'utilisateur et de la vitesse d'actionnement de l'élément d'interaction avec l'utilisateur, l'unité de commande peut comporter au moins :

- une première base de données contenant des valeurs d'un premier motif haptique lorsque la norme de la vitesse d'actionnement est inférieure ou égale à une première valeur donnée et n'est pas nulle et l'élément d'interaction avec l'utilisateur se déplace dans le premier sens,
- une deuxième base de données contenant des valeurs d'un deuxième motif haptique lorsque la norme de la vitesse d'actionnement est au moins égale à une deuxième valeur donnée et l'élément d'interaction avec l'utilisateur se déplace dans le premier sens,
- une troisième base de données contenant des valeurs d'un troisième motif haptique lorsque la norme de la vitesse d'actionnement est inférieure ou égale à une troisième valeur donnée et n'est pas nulle et l'élément d'interaction avec l'utilisateur se déplace dans le deuxième sens,
- une quatrième base de données contenant des valeurs d'un quatrième motif haptique lorsque la norme de la vitesse d'actionnement est au moins égale à une quatrième valeur donnée et l'élément d'interaction avec l'utilisateur se déplace dans le premier sens, et

les moyens aptes à générer les ordres utilisant suivant le sens d'actionnement de l'élément d'interaction avec l'utilisateur, la première et/ou la deuxième bases de données ou la troisième et/ou la quatrième bases de données pour déterminer une valeur d'un nouveau motif haptique sur la base de laquelle un ordre est généré.

Dans un autre exemple de réalisation, l'unité de commande peut comporter au moins :

- une première base de données contenant des valeurs d'un premier motif haptique lorsque la norme de la vitesse d'actionnement est inférieure ou égale à une première valeur donnée et l'élément d'interaction avec l'utilisateur se déplace dans le premier sens,
- une deuxième base de données contenant des valeurs d'un deuxième motif haptique lorsque la norme de la vitesse d'actionnement est au moins égale à une deuxième valeur donnée et l'élément d'interaction avec l'utilisateur se déplace dans le premier sens,
- une troisième base de données contenant des valeurs d'un troisième motif haptique lorsque la norme de la vitesse d'actionnement est inférieure ou égale à une troisième valeur donnée et l'élément d'interaction avec l'utilisateur se déplace dans le deuxième sens,
- une quatrième base de données contenant des valeurs d'un quatrième motif haptique lorsque la norme de la vitesse d'actionnement est au moins égale à une quatrième valeur donnée et l'élément d'interaction avec l'utilisateur se déplace dans le premier sens, et

les moyens aptes à générer les ordres utilisant suivant le sens d'actionnement de l'élément d'interaction avec l'utilisateur, la première et/ou la deuxième bases de données ou la troisième et/ou la quatrième bases de données pour déterminer une valeur d'un nouveau motif haptique sur la base de laquelle un ordre est généré.

Avantageusement, les moyens générant les ordres mettent en œuvre une interpolation, par exemple une interpolation linéaire, entre une valeur de la première base de données et une valeur de la deuxième base de données ou entre une valeur de la troisième base de données et une valeur de la quatrième base de données.

Par exemple, la deuxième vitesse donnée peut être fixée comme étant la vitesse d'actionnement maximale dans le premier sens d'actionnement et la quatrième vitesse donnée est fixée comme étant la vitesse d'actionnement maximale dans le deuxième sens d'actionnement

Les moyens pour déterminer la vitesse d'actionnement peuvent par exemple calculer les dérivées des informations fournis par les moyens de détermination de la position courante.

Dans un exemple de réalisation l'élément d'interaction avec l'utilisateur est mobile en rotation et est solidaire d'un arbre de rotation d'axe longitudinal duquel est solidaire en rotation l'élément d'interaction avec le fluide, les moyens de mesure de la position angulaire comportent un capteur de position angulaire.

Dans le cas où la vitesse d'actionnement de l'élément d'interaction avec l'utilisateur est prise en compte, le procédé de commande peut comporter les étapes:

a) détermination de la position courante de l'élément d'interaction avec l'utilisateur,
b) détermination de la vitesse de l'élément d'interaction avec l'utilisateur,
c) détermination du sens d'actionnement,
d) détermination, pour le sens d'actionnement déterminé, d'une valeur d'un motif haptique pour la vitesse d'actionnement déterminée,
e) génération d'un ordre au système de génération dudit stimulus.

Lors de l'étape d), la valeur d'un motif haptique peut être déterminée à partir d'une première valeur d'un motif haptique pour une vitesse d'actionnement inférieure à une première valeur donnée et non nulle et d'une deuxième valeur d'un motif haptique pour une vitesse d'actionnement au moins égale à une deuxième valeur donnée.

Par exemple, l'étape d) est une étape de calcul de ladite valeur d'un motif haptique pour la vitesse d'actionnement déterminée au moyen d'une fonction seuil, la valeur du motif pour la vitesse d'actionnement déterminée étant soit la première valeur d'un motif haptique pour une vitesse d'actionnement inférieure à une première valeur donnée, soit la deuxième valeur d'un motif haptique pour une vitesse d'actionnement au moins égale à une deuxième valeur donnée.

De manière avantageuse, le procédé peut comporter l'étape préalable à l'étape d) de détermination de l'intention d'action de l'utilisateur sur l'élément d'interaction avec l'utilisateur. Lors de l'étape d), la valeur d'un motif haptique peut être déterminée à partir d'une première valeur d'un motif haptique pour une vitesse d'actionnement inférieure ou égale à une première valeur donnée éventuellement nulle et d'une deuxième valeur d'un motif haptique pour une vitesse d'actionnement au moins égale à une deuxième valeur donnée.

L'étape d) peut être une étape de calcul de ladite valeur d'un motif haptique pour la vitesse d'actionnement déterminée par interpolation, par exemple par interpolation linéaire.

## BRÈVE DESCRIPTION DES DESSINS

La présente invention sera mieux comprise sur la base de la description qui va suivre et des dessins en annexe sur lesquels:

- la figure 1 est une vue en coupe longitudinale d'un exemple d'interface haptique rotative selon l'invention,
- la figure 2 est une vue en coupe transversale le long du plan A-A de l'interface de la figure 1,
- la figure 3 est une vue en perspective d'un exemple de réalisation d'un corps d'épreuve mis en œuvre dans l'interface de la figure 1,
- la figure 4 est une vue en perspective d'un autre exemple de réalisation d'un corps d'épreuve pouvant être mis en œuvre dans l'interface de la figure 1,
- la figure 5 est une vue de côté d'un autre exemple d'interface haptique,
- les figures 6A à 6C sont différentes vues du corps d'épreuve mis en œuvre dans l'interface de la figure 5,
- les figures 7 et 8 représentent des exemples d'algorithmes de commande de l'interface haptique selon l'invention,
- la figure 9 est une vue en éclaté d'un exemple d'interface haptique linéaire selon l'invention ;
- les figures 10 et 11 représentent d'autres exemples d'algorithmes de commande d'un exemple avantageux de l'interface haptique,
- la figure 12 est une représentation graphique du niveau de freinage appliqué par le frein magnéto-rhéologique en fonction de la vitesse d'actionnement de l'élément d'interaction avec l'utilisateur.

## EXPOSÉ DÉTAILLÉ DE MODES DE RÉALISATION PARTICULIERS

Dans la description qui va suivre, l'exemple d'une interface haptique à bouton rotatif va être décrit en détail, mais il sera compris que l'invention s'applique également à une interface haptique à déplacement linéaire de type curseur. Cette interface met en œuvre un fluide magnéto-rhéologique, i.e. dont la viscosité apparente varie en fonction du champ magnétique appliqué, mais la mise en œuvre d'un fluide électro-rhéologique, i.e. un fluide dont la viscosité apparente dépend du champ électrique appliqué, ne sort pas du cadre de la présente invention.

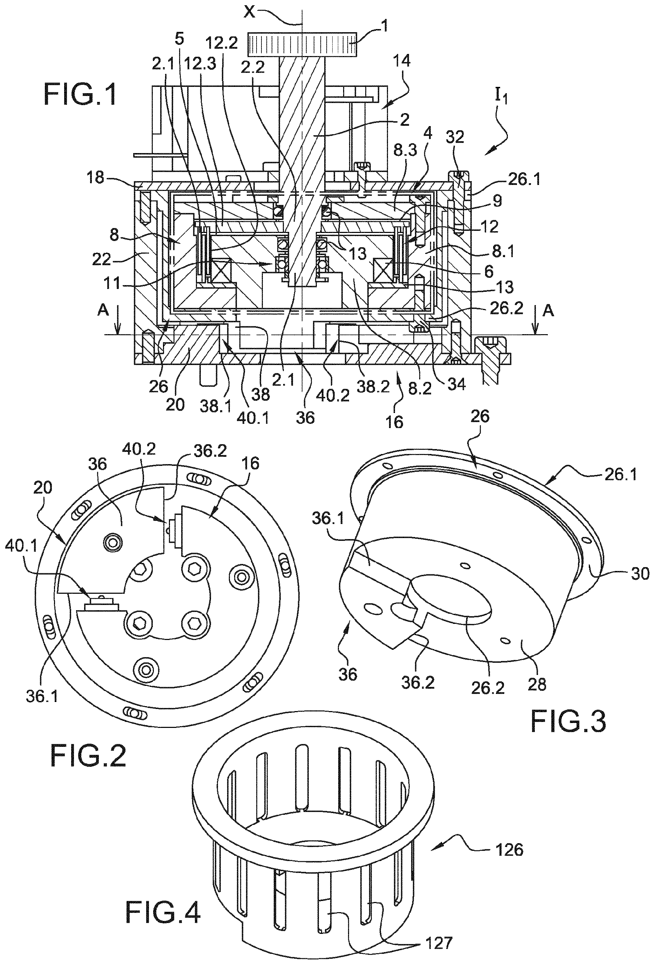

Sur la figure 1, on peut voir une vue en coupe longitudinale d'un exemple de réalisation d'une interface haptique rotative I1 selon l'invention.

L'interface haptique I1 comporte un élément 1 destiné à être manipulé par un utilisateur et qui sera désigné par la suite « bouton », ce bouton est solidaire en rotation d'un arbre 2 mobile en rotation autour de l'axe X, et un dispositif de génération d'effort résistant 4 ou frein magnéto-rhéologique s'opposant à la rotation de l'arbre 2.

Le frein 4 comporte un fluide dont on peut modifier les caractéristiques au moyen d'un champ magnétique et un système de génération d'un champ magnétique 6 reçus dans un boîtier 8. Le fluide est, par exemple un liquide magnéto-rhéologique. L'ensemble comprenant le boîtier, le fluide et le système de génération d'un champ magnétique forme un frein magnéto-rhéologique.

Le boîtier 8 délimite une chambre étanche 9 contenant le fluide magnéto-rhéologique. Tout ou partie de cette chambre étant soumise à un champ magnétique généré par le système 6. Le boîtier 8 comporte une paroi latérale 8.1, un fond inférieur 8.2 et un fond supérieur 8.3.

L'arbre 2 traverse le fond supérieur 8.3, traverse la chambre 9 et traverse le fond inférieur 8.2. L'extrémité 2.1 de l'arbre 2, opposée à celle portant le bouton 1, est logée dans le fond inférieur du boîtier 8 et est guidé en rotation au moyen d'un roulement 11 monté dans le fond inférieur 8.2. Des joints 13, par exemple des joints toriques, assurent l'étanchéité entre l'arbre et les fond inférieur et supérieur.

Le boîtier 8 délimite une chambre étanche confinant le fluide magnétorhéologique.

Le frein 4 comporte également un élément 12 solidaire en rotation de l'arbre 2 et logé dans la chambre étanche 10. Cet élément est apte à interagir avec le fluide magnéto-rhéologique, la rotation de l'élément 12 étant plus au moins freinée par le fluide magnéto-rhéologique en fonction de sa viscosité apparente.

Dans l'exemple représenté, l'élément 12 comporte deux parois latérales concentriques 12.1, 12.2 de section transversale circulaire solidaire d'un fond 12.3, lui-même solidarisé en rotation avec l'arbre.

En variante, l'élément 12 peut ne comporter qu'une paroi latérale ou plus de deux parois latérales concentriques. En variante encore, l'élément 12 pourrait être formé par un disque. Par ailleurs, l'élément d'interaction pourrait comporter des lumières et/ou des portions en saillie ou en creux afin d'augmenter la résistance au déplacement.

Dans l'exemple représenté, le fond inférieur 8.2 du boîtier 8 a une forme telle que le volume intérieur de la chambre étanche 9 a une forme qui correspond à celle de l'élément d'interaction 12, ce qui permet de réduire la quantité de fluide nécessaire. Dans l'exemple représenté, un élément cylindrique 13 à section circulaire solidaire du boîtier est interposé entre les deux parois latérales 12.1, 12.2, celui-ci contribue à l'effet de cisaillement du fluide magnéto-rhéologique lors que les parois latérales 12.1 et 12.2 sont mises en rotation.

Les parois latérales 12.1, 12.2 de l'élément 12 peuvent être en matériau magnétique ou amagnétique.

Dans l'exemple représenté, le système de génération d'un champ magnétique variable 6 comporte une bobine fixée sur le boîtier et disposée à l'intérieur de l'élément d'interaction 12, et une alimentation en courant (non représentée) commandée par une unité de commande en fonction de la manipulation du bouton et de motifs préenregistrés.

L'interface comporte également un capteur de position 14 qui est, dans l'exemple représenté, situé à l'extérieur du boîtier et en partie solidaire de l'arbre. Le capteur de position 14 permet de mesurer la position courante du bouton, qui est dans l'exemple représenté par la position angulaire courante. Il peut s'agir par exemple d'un codeur optique incrémental.

L'interface haptique comporte également un bâti 16 dans lequel est disposé le boîtier 8. Le bâti 16 comporte un premier et un deuxième flasque d'extrémité 18, 20 et une paroi latérale 22 fixée aux deux flasques 18, 20, le premier flasque 18 est traversé par l'arbre rotatif. Le capteur de position 14 est fixé sur le premier flasque du bâti.

L'interface comporte également des moyens pour détecter l'intention d'action de l'utilisateur, ces moyens détectent alors le couple exercé par l'utilisateur sur le bouton avant qu'un déplacement du bouton perceptible par l'utilisateur et par le capteur de position lui soit appliqué.

Dans l'exemple représenté, les moyens comportent un corps d'épreuve 26 dont on va détecter la déformation provoquée par le couple appliqué par l'utilisateur et des capteurs d'effort. Le corps d'épreuve est représenté seul sur la figure 3. Le corps d'épreuve 26 est fixé par une extrémité longitudinale 26.1 au bâti 16 et par l'autre extrémité longitudinale 26.2 au frein magnéto-rhéologique, i.e. au boîtier 8 dans l'exemple représenté. Les capteurs d'effort sont en contact avec le corps d'épreuve au niveau de son extrémité longitudinale 26.2 solidarisée au boîtier 8.

Dans l'exemple représenté sur les figures 1, 2 et 3, le corps d'épreuve 26 comporte un corps de forme cylindrique à section circulaire fermé par un fond 28 à l'extrémité longitudinale 26.2. Une collerette annulaire 30 s'étend radialement vers l'extérieur au niveau de l'autre extrémité longitudinale 26.1.

Le diamètre intérieur du corps d'épreuve correspond au diamètre extérieur du boîtier 8, augmenté d'un jeu de fonctionnement. Le fond du corps d'épreuve est disposé entre le boîtier et le deuxième flasque 20 du bâti 16.

Le corps d'épreuve est solidarisé au bâti au moyen d'au moins une vis 32 traversant le flasque 18 et la collerette 30. Dans l'exemple représenté, les vis 32 servent également à lier le flasque 18 à la paroi latérale 28.

Le fond 28 du corps d'épreuve est fixé au boîtier 8 par au moins une vis 34.

Le corps d'épreuve 26 comporte également un élément 36 en saillie de son extrémité longitudinale 26.2 opposée à celle en contact avec le boîtier. L'élément 36 est reçu dans une cavité 38 ménagée dans le flasque 20 du bâti.

Dans l'exemple représenté, l'élément en saillie 36 a la forme d'une portion angulaire centrée sur l'axe longitudinal. La portion angulaire 36 est délimitée par deux faces 36.1, 36.2. La cavité 38 présente une forme correspondant à celle de la portion angulaire 36 et est délimitée par deux faces 38.1 38.2 chacune en regard d'une face 36.1, 36.2 de la portion angulaire 36. Un capteur d'effort 40.1 est monté sur la face 38.1 de la cavité en contact avec la face 36.1 de la portion angulaire et un capteur d'effort 40.2 est monté sur la face 38.2 de la cavité en contact avec la face 36.2 de la portion angulaire 36. Un contact mécanique de type ponctuel est assuré entre chaque capteur d'effort 40.1, 40.2 et le corps d'épreuve 26. Les capteurs d'effort 40.1, 40.2 sont avantageusement montés précontraints.

Ainsi lorsqu'un couple est appliqué au bouton, celui-ci provoque une déformation par torsion du corps d'épreuve 26 par l'intermédiaire du boitier 8 lui-même en interaction avec le fluide, lui-même en interaction avec l'élément d'interaction 12, lui-même lié à l'arbre 2 Cette déformation est détectée par l'un ou l'autre des capteurs d'effort 40.1, 40.2 suivant le sens de rotation du bouton.

Le corps d'épreuve est par exemple en matériau plastique, tel que l'ABS.

Le matériau du corps d'épreuve et sa géométrie peuvent être déterminés en fonction du couple minimal et du couple maximal appliqués, de la sensibilité des capteurs d'effort et du seuil de détection souhaité. En outre, la déformation du corps d'épreuve est telle qu'elle n'est pas perceptible par l'utilisateur. Par exemple, on peut considérer qu'une déformation du corps d'épreuve de quelques microns n'est pas perceptible par l'utilisateur.

Alternativement, on pourrait mesurer les efforts directement sur le boîtier 8 ou sur l'arbre rotatif, pour cela un capteur de couple serait mis en œuvre. Cependant un capteur de couple a un coût élevé et un encombrement important par rapport aux capteurs de force. Par ailleurs, un capteur de couple fournit une valeur du couple précise et calibrée alors que cette information n'est pas utile dans le cadre de l'invention.

Le capteur d'effort est par exemple réalisé à l'aide d'éléments piézorésistifs assemblés sous la forme d'un pont de Wheatstone, ils permettent une sensibilité de l'ordre de quelques dizaines de mV par Newton avec une raideur suffisamment élevée pour limiter le déplacement à quelques dizaines de microns à pleine charge. En variante, le ou les capteurs d'effort pourraient être remplacés par un ou des capteurs de déformation formés, par exemple, par des jauges de contrainte directement appliquées sur le corps d'épreuve pour détecter sa déformation.

Sur la figure 4, on peut voir un autre exemple d'un corps d'épreuve 126 dont la forme générale est identique à celle du corps d'épreuve 26, mais comporte en plus des lumières longitudinales 127 dans la paroi latérale du corps d'épreuve 126. De préférence, les lumières 127 sont réparties angulairement de manière régulière. Le corps d'épreuve présente dans cette réalisation une plus grande aptitude à la déformation. Il est par exemple réalisé en alliage d'aluminium.

Des lumières inclinées par rapport à l'axe longitudinal et/ou ayant une forme autre que rectiligne par exemple une forme courbée ne sortent pas du cadre de la présente invention. Par ailleurs les lumières n'ont pas nécessairement toutes les mêmes dimensions.

De manière avantageuse, on peut prévoir des moyens pour amplifier la déformation du corps d'épreuve sous une contrainte de torsion axiale tout en réduisant la déformation du corps d'épreuve pour toute autre contrainte non pertinente dans le cadre de l'invention, comme par exemple une contrainte radiale qui serait appliquée au bouton de manière parasite par l'utilisateur. La sensibilité de la détection est ainsi améliorée et les perturbations ou fausses détections peuvent être éliminées.

L'exemple de corps d'épreuve des figures 1 à 4 permet d'augmenter la sensibilité du dispositif de mesure en disposant les capteurs sur un diamètre le plus grand possible.

Dans l'exemple représenté et de manière avantageuse, les parois 36.1 et 36.2 de l'élément en saillie sont disposées à 90° l'une par rapport à l'autre. Ce positionnement associé à un contact ponctuel au niveau des capteurs d'effort 40.1 et 40.2 permet de décomposer la contrainte de déformation du corps d'épreuve et de privilégier la sensibilité aux efforts selon deux composantes orthogonales situées dans le plan du bâti 16. Ainsi par exemple, la sensibilité est fortement réduite pour des efforts parasites exercés perpendiculairement au plan du bâti 16. De plus, un traitement calculatoire ou algorithmique sur les composantes des forces orthogonales mesurées par les capteurs 40.1 et 40.2, comme par exemple un calcul basé sur la différence de mesure entre les deux capteurs pondéré par la composante commune de mesure des deux capteurs dans le cas d'un assemblage préférentiel des capteurs avec une précontrainte de charge, permet de réduire dans une certaine mesure la sensibilité aux efforts parasites exercés parallèlement au plan du bâti 16.

Un exemple de fonctionnement du dispositif va maintenant être décrit.

L'utilisateur tourne le bouton autour de son axe dans un premier sens de rotation et l'amène dans une position angulaire définie comme une butée. Un champ magnétique est appliqué au fluide magnéto-rhéologique de sorte que sa variation de viscosité apparente génère un couple au niveau de l'élément d'interaction avec le fluide simulant une butée au niveau du bouton dans le premier sens de rotation.

Si l'utilisateur maintient son effort sur le bouton dans le premier sens de rotation, le corps d'épreuve 26 subit un couple de torsion via le boîtier, lui-même en interaction avec le fluide, lui-même en interaction avec l'élément d'interaction 12, lui-même lié à l'arbre 2.

Cette déformation est mesurée par le capteur de force disposé en aval dans le premier sens de rotation. Le fait de savoir lequel des capteurs de force est sollicité permet de connaître le sens dans lequel l'utilisateur a l'intention de tourner le bouton. De manière préférentielle, on peut combiner les mesures issues des deux capteurs de force assemblés avec une précontrainte de charge pour déterminer le sens dans lequel l'utilisateur a l'intention de tourner le bouton. La détection d'un couple minimal permet de confirmer que l'utilisateur a effectivement l'intention de faire pivoter le bouton. Il en est déduit que l'utilisateur a l'intention de maintenir le bouton en butée. Le champ magnétique est maintenu de sorte à opposer un effort au mouvement de l'élément d'interaction 12 via le fluide magnéto-rhéologique visqueux.

Si l'utilisateur a l'intention de faire pivoter le bouton dans un deuxième sens opposé au premier sens, c'est le capteur d'effort disposé en amont en considérant le premier sens de rotation, qui va être sollicité. De manière préférentielle, on peut combiner les mesures issues des deux capteurs de force assemblés avec une précontrainte de charge pour déterminer le nouveau sens dans lequel l'utilisateur a l'intention de tourner le bouton. On en déduit l'intention de l'utilisateur, cette intention est confirmée par la détection d'un couple minimal. Dans ce cas, le champ magnétique est annulé, la viscosité apparente du fluide diminue fortement, l'élément d'interaction peut donc tourner dans le deuxième sens sans ressentir d'effet de collage. On peut ainsi reproduire grâce à l'invention le fonctionnement d'une roue libre.

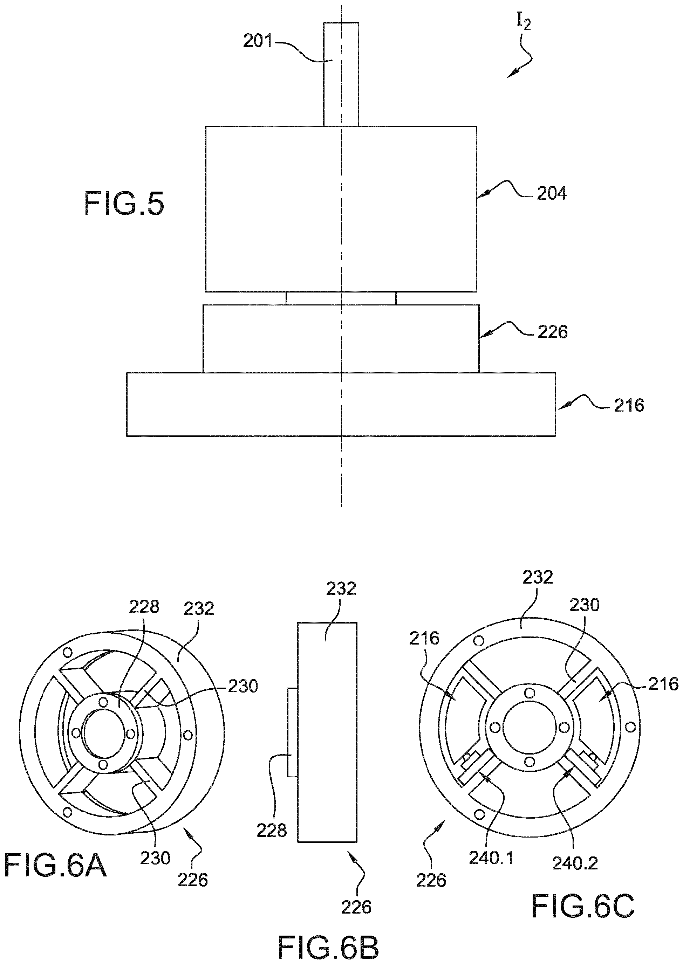

Sur les figures 5 et 6A à6C, on peut voir un autre exemple de réalisation d'une interface I2 selon l'invention comportant un bâti 216, un frein 204, un corps d'épreuve 226 ayant la forme d'une roue et un élément d'interaction avec l'utilisateur 201, l'élément d'interaction avec le fluide n'étant pas visible.

La roue comporte un moyeu 228, un anneau extérieur 232 et des rayons 230 reliant le moyeu 228 à l'anneau extérieur 232.

Dans cet exemple, le moyeu 228 est solidarisé au boîtier de l'interface par exemple par des vis traversant axialement le moyeu 228 et l'anneau extérieur 232 est solidarisé au bâti par exemple par des vis traversant axialement l'anneau extérieur.

Deux capteurs d'effort 240.1, 240.2 sont disposés en appui chacun contre un rayon 230 et disposés par rapport aux rayons de sorte que, lorsque le corps d'épreuve 226 est sollicité dans un sens de rotation, un seul des capteurs est sollicité. Les capteurs d'efforts sont fixés sur le bâti 216 et en appui contre une face d'un rayon 230. En variante, les capteurs d'effort pourraient être assemblés avec une précontrainte de charge, ou, comme cela a été mentionné ci-dessus, être remplacés par des jauges d'élongation disposées sur le corps d'épreuve et détectant la déformation par exemple des rayons sous l'effet du couple de torsion. Plus généralement les capteurs d'effort peuvent être remplacés par des capteurs de déformation.

Le fonctionnement de ce dispositif est similaire à celui du dispositif de la figure 1 décrit ci-dessus.

Des moyens permettant d'appliquer des contraintes mécaniques au corps d'épreuve, comme des moyens de guidage en rotation ou en translation, peuvent avantageusement être ajoutés, ce qui permet de réduire le nombre de capteurs de force en assemblant ce dernier avec une précontrainte de charge.

Les données issues de ces capteurs de force ou de déformation sont traitées par un système électronique afin de déterminer si le couple exercé par l'utilisateur sur l'interface dépasse un seuil prédéterminé. Le signe de couple est également déterminé et permet de connaître le sens dans lequel l'utilisateur a l'intention de déplacer le bouton.

Comme cela a été indiqué ci-dessus, la connaissance de la valeur réelle du couple de torsion n'est pas nécessaire, la connaissance du sens de torsion est suffisante. On peut donc mettre en œuvre des capteurs bas coût permettant de détecter au minimum un seuil binaire ou une fonction monotone de l'effort ou de la déformation, en dehors de toute spécification de type linéarité, dynamique, résolution, etc., dans la mesure où le capteur est suffisamment sensible pour détecter un couple minimum agissant sur l'interface sans qu'il n'y ait mise en rotation de cette dernière. Le capteur est aussi tel qu'il est capable de tenir un effort maximal sans dégradation.

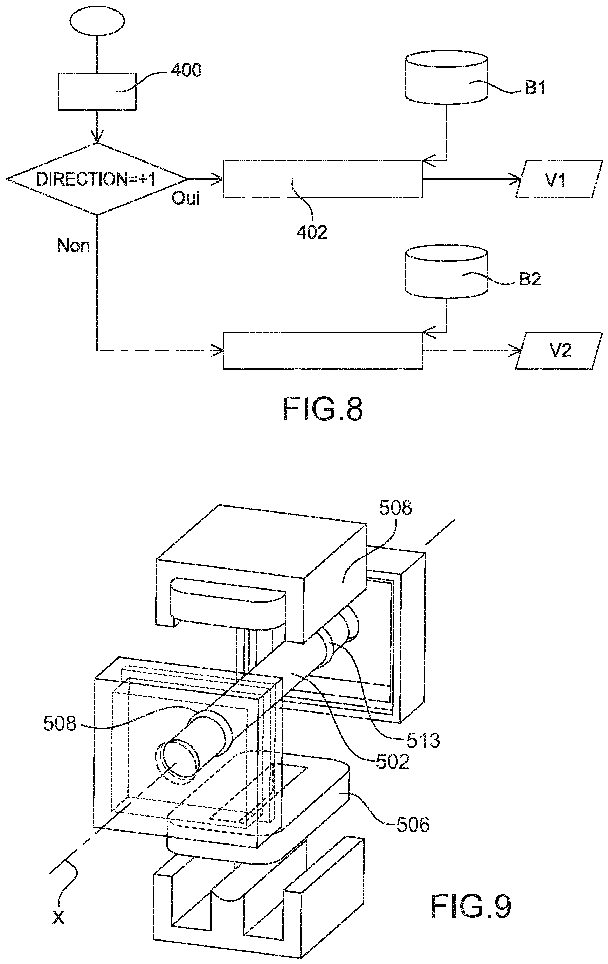

Sur la figure 9, on peut voir une vue en éclaté d'un exemple représenté schématiquement d'une interface linéaire selon l'invention.

Le dispositif comporte un boîtier 508 dans lequel est monté un axe 502 mobile axialement le long de son axe X, l'axe 502 étant destiné à porter un élément d'interaction avec l'utilisateur (non représenté) au niveau d'au moins l'une de ses extrémités longitudinales, des moyens de génération d'un champ magnétique variable 506 est disposé dans le boîtier. Le boiter délimite une chambre étanche qui contient du fluide magnéto-rhéologique et qui est traversée par l'axe 502. Des joints 513 assurent un coulissement étanche de l'arbre dans la chambre.

L'interface comporte également un capteur de position (non représenté) permettant de mesurer la position longitudinale courante de l'axe 502.

L'interface comporte également des moyens pour détecter l'intention d'action de l'utilisateur, ces moyens détectent alors une force de translation appliquée par l'utilisateur sur l'axe avant qu'un déplacement de l'axe perceptible par l'utilisateur et par le capteur de position lui soit appliqué. Ces moyens comportent un corps d'épreuve (non représenté) dont la déformation est mesurée par un ou des capteurs de force ou de déformation, le corps d'épreuve étant fixé d'une part sur le boîtier et sur le bâti (non représenté). Si l'utilisateur a l'intention de déplacer l'axe dans le premier sens de translation, le corps d'épreuve subit une force de cisaillement via le boîtier, lui-même en interaction avec le fluide, lui-même en interaction avec l'élément d'interaction, lui-même lié à l'axe 502.

Nous allons maintenant décrire des algorithmes permettant de faire fonctionner l'interface haptique afin que la sensation ressentie par l'utilisateur en manipulant le bouton soit en accord avec les motifs enregistrés et offre un rendu haptique amélioré. Ces algorithmes sont appliqués de manière séquentielle et périodique.

Un motif haptique est défini par un effort de freinage à appliquer qui est fonction des données suivantes :

- la position angulaire courante du bouton,
- le sens de rotation courant du bouton ou l'intention d'action de l'utilisateur de tourner le bouton dans un sens ou dans un autre,
- la vitesse de rotation courante du bouton.

Dans le cas présent, nous nous intéressons particulièrement aux cas où la vitesse de rotation du bouton est nulle ou au moins inférieure à une valeur en dessous de laquelle on considère que le déplacement du bouton est imperceptible.

Une électronique de contrôle utilise conjointement les informations du capteur de position angulaire et les informations des capteurs d'effort pour déterminer le couple résistant que doit générer le frein 4.

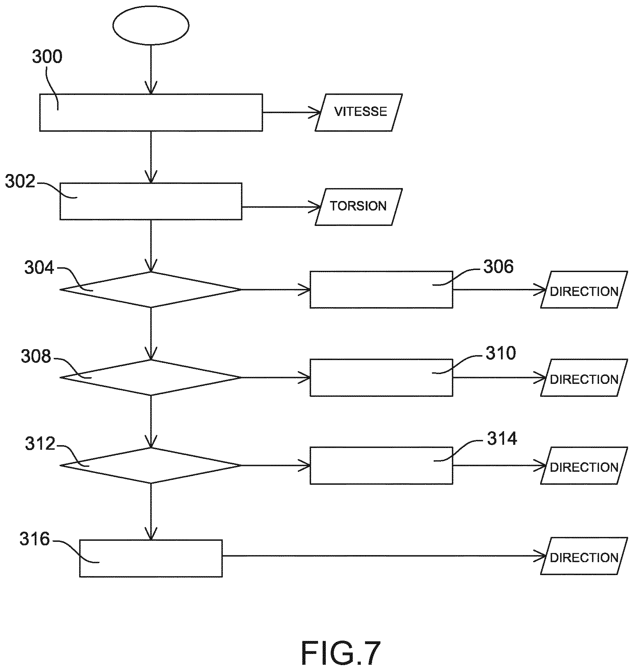

L'algorithme représenté sur la figure 7 est appliqué pour déterminer le sens de rotation dans lequel le bouton est tourné.

Les variables utilisées sont les suivantes:

La variable VITESSE est la vitesse de déplacement du bouton.
La variable TORSION est une estimation du couple de torsion. Une connaissance de la valeur précise du couple n'est pas requise. Cette estimation est obtenue à partir des informations fournies par le capteur de force qui est sollicité par le corps d'épreuve dans l'exemple de réalisation des figures 1 à 4. L'estimation du couple de torsion permet de savoir si celui-ci est supérieur ou inférieur à des valeurs seuils en tenant compte du sens dans lequel s'applique le couple de torsion.
La variable DIRECTION est le sens d'actionnement du bouton, soit elle est égale à +1, soit elle est égale à -1, soit elle est nulle.

Lors d'une première étape 300, la vitesse de déplacement du bouton est calculée, par exemple par approximation de la dérivée des informations fournies par le capteur angulaire dont les informations sont échantillonnées à une cadence temporelle Te déterminée, on obtient la variable VITESSE.

On considère que la vitesse est nulle lorsqu'elle est inférieure à une valeur réelle donnée et par conséquent l'approximation de la dérivée des informations fournies par le capteur angulaire échantillonné à une cadence Te retourne à une valeur nulle.

Lors d'une étape suivante 302, on calcule la fonction d'estimation du moment de torsion appliqué par l'utilisateur à partir des informations fournies par les capteurs d'effort, cette fonction est la variable TORSION.

Lors d'une étape suivante 304, on vérifie si la variable VITESSE est nulle, si elle n'est pas nulle, on affecte à la variable DIRECTION le signe de la vitesse (étape 306).

Si la variable VITESSE est nulle, on utilise la variable TORSION.

Dans une étape suivante 308; on vérifie si la variable TORSION est supérieure à un seuil dit "Seuil positif", si c'est le cas on affecte à la variable DIRECTION la valeur +1 (étape 310).

Sinon dans une étape suivante 312, on vérifie si la variable TORSION est inférieure à un seuil dit "Seuil négatif", si c'est le cas on affecte à la variable DIRECTION la valeur -1 (étape 314).

Sinon, i.e. si la vitesse est nulle et le couple de torsion est supérieur au seuil négatif et est inférieur au seuil positif, alors, lors une étape suivante 316, la variable DIRECTION prend la valeur nulle. Le système considère qu'aucun couple n'est appliqué au bouton, il peut par exemple en être déduit que l'utilisateur a lâché le bouton.

Grâce à cet algorithme, il peut être déterminé dans le cas où la vitesse de déplacement du bouton est nulle le sens dans lequel l'utilisateur à l'intention de déplacer le bouton sans déplacement significatif de celui-ci.

En effet, on peut grâce aux informations fournies uniquement par le ou les capteurs de force ou de déformation déterminer dans quel sens le couple de torsion s'applique, même sans déplacement significatif du bouton, et donc décider dans quel sens l'utilisateur a l'intention de déplacer le bouton, et donc commander le système de génération d'un champ magnétique variable en conséquence.

En variante, la vitesse de rotation de l'élément d'interaction pourrait être mesurée en utilisant un capteur dédié à la mesure de la vitesse de rotation. Ce capteur peut être par exemple monté sur l'arbre d'actionnement. Il peut s'agir par exemple d'un ou de capteurs optiques, d'un ou de capteurs à effet hall, d'un ou de capteurs à induction, qui génère un signal de sortie dont la fréquence est fonction de la vitesse de rotation. Des moyens sont prévus pour convertir la fréquence en tension. Cette tension peut ensuite être mesurée par l'électronique de contrôle pour connaitre ainsi la vitesse de rotation. Il est à noter que des capteurs de vitesse intégrant directement dans leur boitier la fonction de conversion « fréquence vers tension » peuvent être utilisés.

Des capteurs basés sur l'utilisation du principe d'une dynamo peuvent être aussi utilisés. Ils fournissent en sortie une grandeur analogique, généralement une tension, qui est fonction de la vitesse de rotation. Cette tension peut ensuite être mesurée par l'électronique de contrôle pour connaître ainsi la vitesse de rotation.

Dans un deuxième algorithme représenté sur la figure 8, le système détermine ensuite quelle valeur du motif haptique il applique.

Pour chaque sens d'actionnement du bouton, un motif haptique est prédéterminé :

- un motif M1 défini pour le sens positif d'actionnement du bouton;
- un motif M2 défini pour le sens négatif d'actionnement du bouton.

Un motif est lui-même défini par un ensemble de valeurs de motif de freinage à appliquer au bouton. Chaque valeur de motif est associée à une position angulaire spécifiée du bouton.

Ces motifs sont enregistrés dans une base de données:
Lors d'une première étape 400, on détermine la position courante du bouton à partir de la mesure fournie par le capteur de position courante.

Ensuite, si la valeur de la variable DIRECTION est égale à +1, on va chercher dans la base de données B1 du motif M1 la valeur V1 du motif associée à la position courante du bouton (étape 402).

Sinon, on va chercher dans la base de données B2 du motif M2 la valeur V2 du motif associée à la position courante du bouton (étape 404).

Il est à noter que les motifs M1 et M2 pourraient être identiques.

Ensuite, l'électronique de commande génère un ordre au système de génération de champ magnétique d'appliquer le champ correspondant à la valeur du pattern du motif M1 ou du motif M2.

Considérons que l'utilisateur tourne le bouton dans un sens positif et entre dans la zone définie comme une butée, le système applique de manière connue le motif reproduisant une butée.

L'utilisateur ne peut plus déplacer le bouton dans le sens positif, le système détecte alors dans cette position une vitesse nulle.

Il applique le premier algorithme qui en fonction du couple de torsion détermine le sens dans lequel l'utilisateur a l'intention de tourner le bouton (variable DIRECTION).

A partir de cette connaissance du sens d'actionnement du bouton, le système applique le deuxième algorithme et détermine le motif à appliquer et, sur cette base, commande le système de génération de champ magnétique.

Si le sens est positif, le motif butée doit être maintenu et l'application du champ magnétique suffisant pour simuler la butée est maintenue.

Si le sens est négatif, c'est le motif correspondant au sens négatif qui est reproduit, par exemple le champ magnétique est diminué voire annulé. Puisque le champ magnétique est modifié avant même que l'utilisateur ait déplacé perceptiblement le bouton, il ne ressent pas de sensation de collage

L'invention a également pour effet de supprimer cette sensation de collage dans le cas où, dans une position courante donnée du bouton, les motifs M1 et M2 sont différents et l'utilisateur change de sens de rotation. Au moment du changement de sens de rotation, la vitesse détectée est nulle et les premier et deuxième algorithmes sont appliqués de la même manière.

Il est à noter que les algorithmes sont exécutés en permanence afin de déterminer en permanence la valeur du motif à reproduire et d'adapter en permanence la viscosité apparente du fluide afin d'atteindre cette valeur de motif.

L'invention permet également de détecter lorsque l'utilisateur a lâché le bouton et qu'il n'est plus utile d'appliquer un champ magnétique pour simuler une sensation, ceci est détecté lorsque la variable DIRECTION = 0. Dans ce cas l'alimentation électrique dans la bobine peut être coupée.

L'invention permet en outre soit de réduire la consommation électrique du dispositif en interrompant la génération d'un champ magnétique lorsque ce n'est pas nécessaire, soit à consommation égale d'appliquer un très fort champ magnétique pendant un temps court pour simuler une butée forte, dans ce cas la bobine est de préférence de petite taille.

Par ailleurs, l'invention permet de détecter lorsque l'utilisateur a saisi à nouveau le bouton en détectant l'application à nouveau d'un couple sur le bouton et de détecter le sens dans lequel l'utilisateur a l'intention de déplacer le bouton et donc de commander le système de génération de champ magnétique de sorte que, lorsque l'utilisateur déplace perceptiblement le bouton, il ressente sans retard la sensation haptique.

L'ordre de grandeur du temps de réaction du dispositif est de quelques millisecondes.

Dans le cas d'un bouton à déplacement linéaire de type curseur, on détermine une force de translation. Sinon l'algorithme est identique à celui décrit pour un bouton rotatif.

Les informations obtenues par les capteurs de force ou de déformation peuvent être utilisées par le système à d'autres fins. Par exemple, elles peuvent être utilisées pour déterminer si un utilisateur force volontairement sur le bouton pour tenter de franchir une butée. Le bouton pourrait alors remonter une information à un système de supervision indiquant cette « faute ».

Grâce à l'invention, on réalise une interface haptique offrant un très bon rendu haptique en réduisant sensiblement la sensation de collage, voire en la supprimant et en améliorant la réactivité de l'interface. En outre, l'interface haptique peut présenter une consommation électrique réduite.

Dans un exemple très avantageux, la détection d'intention d'action de l'utilisateur peut également être associée à une prise en compte de la valeur de la vitesse d'actionnement du bouton, en plus du sens de déplacement, pour générer l'ordre au système de génération de champ magnétique.

Pour cela on définit quatre motifs:

- un motif MPL défini pour le sens d'actionnement considéré comme positif du bouton et pour une vitesse de rotation faible;
- un motif MPR pour le sens positif d'actionnement du bouton et pour une vitesse de rotation rapide;
- un motif MNL défini pour le sens d'actionnement considéré comme négatif du bouton et pour une vitesse de rotation faible;
- un motif MNR pour le sens d'actionnement du bouton négatif et pour une vitesse de rotation rapide.

La vitesse faible est une vitesse dont la valeur est inférieure ou égale à un seuil donné mais n'est pas nulle.

La vitesse rapide est considérée comme la vitesse maximale avec laquelle le bouton peut être actionné. La vitesse rapide dans le sens positif peut être égale ou différente de la vitesse rapide dans le sens négatif.

La vitesse d'actionnement est avantageusement approximée à partir des informations fournies par le capteur de position, ce qui permet d'offrir un système compact. Néanmoins on pourrait utiliser tout autre dispositif distinct du capteur de position pour déterminer la vitesse de rotation.

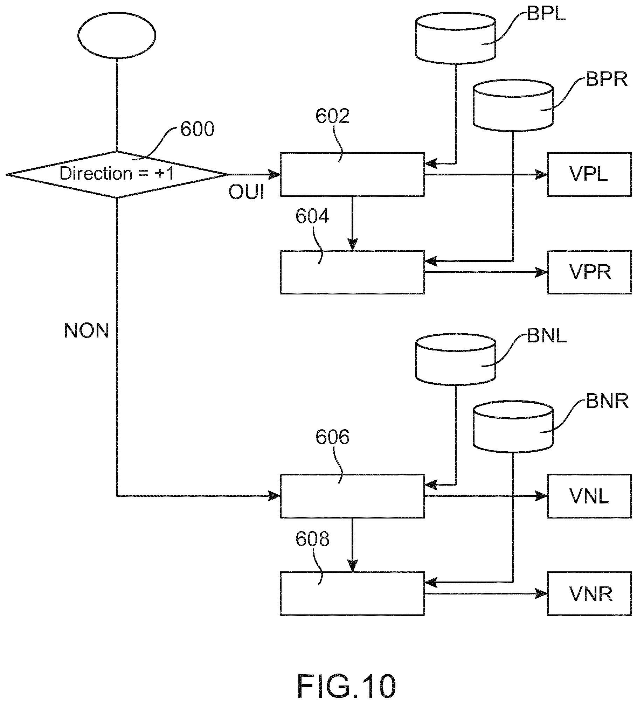

Sur la figure 10 est représenté un premier algorithme assurant le choix des valeurs de motifs à prendre en compte.

Lors d'une première étape 600, on détermine la position du bouton, la vitesse d'actionnement (variable VITESSE) et le sens d'actionnement (variable DIRECTION) à partir de l'information fournie par le capteur de position courante. La variable DIRECTION peut prendre la valeur +1 (sens de déplacement considéré comme positif), la valeur -1 (sens de déplacement considéré comme négatif) ou la valeur 0 lorsque la vitesse est nulle.

Si la variable DIRECTION est égale à +1, alors :

- on va chercher dans la base de données de motif positif à vitesse lente BPL la valeur de motif VPL (étape 602), et
- on va chercher dans la base de données de motif positif à vitesse rapide BPR la valeur de motif VPR (étape 604).

Les étapes 602 et 604 peuvent être simultanées ou séquentielles.

Sinon, i.e. si la variable DIRECTION est égale à -1 ou O, alors :

- on va chercher dans la base de données de motif négatif à vitesse lente BNL la valeur de motif VNL (étape 606), et
- on va chercher dans la base de données de motif négatif à vitesse rapide BNR la valeur de motif VNR (étape 608).

A la fin du déroulement du premier algorithme, on dispose de deux valeurs de motif soit VPL et VPR, soit VNL et VNR.

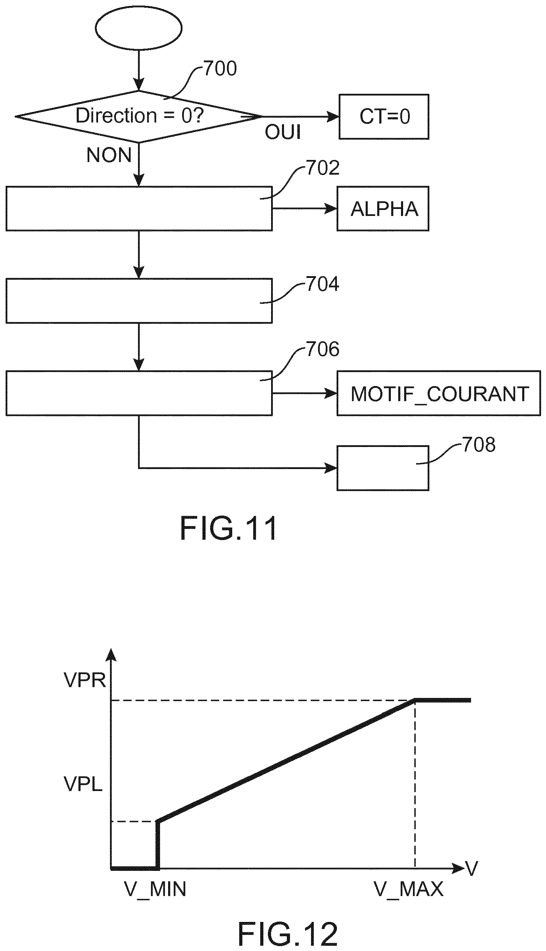

Sur la figure 11, on peut voir un exemple avantageux d'un deuxième algorithme permettant de déterminer la contrainte de freinage ou l'intensité du courant, celles-ci étant considérées comme proportionnelles, à appliquer au système de génération de champ magnétique.

Lors d'une première étape 700, on vérifie si la variable DIRECTION est égale à 0, si c'est le cas, dans cet exemple l'unité de commande génère un ordre au frein de n'appliquer aucune contrainte au bouton, i.e. aucun champ magnétique n'est appliqué au fluide. L'algorithme est terminé. Alternativement, il pourrait être décidé de maintenir le dernier champ magnétique appliqué. Cette étape pourrait avoir lieu avant l'étape 702.

Si la variable DIRECTION est différente de 0, i.e. si elle est égale à +1 ou - 1 alors, lors d'une étape suivante 702, on calcule le coefficient ALPHA qui est égal à : (abs(VITESSE)-V_MIN)/(V_MAX-V-MIN).

abs(VITESSE) étant la valeur absolue de la variable VITESSE,

V_MAX étant la valeur fixée de la vitesse maximale d'actionnement, cette valeur est fixée par exemple à la vitesse de rotation maximale usuelle avec laquelle un utilisateur actionne habituellement le bouton lorsqu'il souhaite réaliser des déplacements rapides et grossiers avec l'interface.

V_MIN étant la valeur fixée de la vitesse minimale d'actionnement, cette valeur est fixée par exemple à la vitesse de rotation minimale usuelle avec laquelle un utilisateur actionne habituellement le bouton lorsqu'il souhaite réaliser des déplacements lents et précis avec l'interface.

V_MAX correspond à la vitesse rapide à laquelle les motifs MPR et MNR sont établis sans correction.

V_MIN correspond à la vitesse lente à laquelle les motifs MPL et MNL sont établis sans correction.

Lors d'une étape suivante 704, on limite avantageusement le coefficient ALPHA ente 0 et 1 pour éviter des résultats de calcul aberrants, en effet il peut arriver que, de manière exceptionnelle, le bouton soit actionné à une vitesse supérieure à la vitesse maximale qui a été fixée, i.e. que le calcul de la valeur ALPHA fournisse un résultat supérieur à 1 puisque rien ne limite mécaniquement la vitesse d'actionnement. De même il peut arriver que, de manière exceptionnelle, le bouton soit actionné à une vitesse inférieure à la vitesse minimale qui a été fixée, i.e. que le calcul de la valeur ALPHA fournisse un résultat inférieur à 0 puisque il est possible de choisir pour V_MIN une valeur non nulle.

Lors d'une étape suivante 706, on calcule la variable MOTIF_COURANT à partir d'une interpolation linéaire sur la base des valeurs de motifs sélectionnées par le premier algorithme.

$$MOTIF\_COURANT = (1-ALPHA)*\ VPL\ +\ ALPHA*\ VPR$$

si le sens d'actionnement est positif ou

$$MOTIF\_COURANT = (1-ALPHA)*\ VNL\ +\ ALPHA*\ VNR$$

si le sens d'actionnement est négatif.

Lors d'une étape suivante 708, on applique la variable MOTIF_COURANT au frein.

Dans l'algorithme de la figure 11, le MOTIF_COURANT est calculé à partir d'une interpolation linéaire. Sur la figure 12, on peut voir une représentation de ce motif en fonction de la vitesse d'actionnement dans le cas d'un actionnement dans le sens positif.

Toute autre interpolation, par exemple une interpolation quadratique, peut être utilisée.

Il peut également être envisagé d'utiliser une fonction seuil, le MOTIF_COURANT prenant une valeur pour une vitesse inférieure ou égale à une valeur seuil et prenant une autre valeur pour une vitesse supérieure à la valeur seuil.

Dans l'algorithme de la figure 11, on réalise une accentuation de l'effort de freinage avec la vitesse d'actionnement si on choisit de prendre VPR > VPL (respectivement VNR > VNL pour l'autre sens d'actionnement).

Il peut au contraire être prévu que l'effort de freinage diminue alors que la vitesse d'actionnement augmente ou encore que la relation entre le MOTIF COURANT et la vitesse ne soit pas monotone.

Les algorithmes décrits ci-dessus s'appliquent complètement à une interface haptique linéaire, le capteur de position déterminerait alors des positions longitudinales et non des positions angulaires.

L'interface haptique selon l'invention est particulièrement adaptée à une application dans des véhicules automobiles, par exemple pour former une interface haptique embarquée assistant le conducteur automobile. Elle peut permettre à l'utilisateur d'interagir avec différents équipements ou accessoires du véhicule comme le GPS (Global Positioning System en terminologie anglaise ou Système de positionnement mondial), la radio, la climatisation....

## Revendications

1. Interface haptique comportant :

   - un élément d'interaction (1) avec un utilisateur apte à se déplacer dans un premier sens et dans un deuxième sens,
   - un élément d'interaction (12) avec un fluide dont la viscosité varie en fonction d'un stimulus extérieur, l'élément d'interaction (12) avec le fluide étant solidaire au moins en translation ou au moins en rotation de l'élément d'interaction (1) avec l'utilisateur,
   - des moyens de mesure d'une position courante (14) de l'élément d'interaction (1) avec l'utilisateur,
   - un frein comportant un fluide dont la viscosité apparente varie en fonction d'un stimulus extérieur et un système de génération (6) dudit stimulus sur commande dans ledit fluide, l'élément d'interaction (12) avec le fluide étant disposé dans le fluide,
   - une unité de commande apte à générer des ordres audit système de génération dudit stimulus de modifier la valeur du stimulus,

   **caractérisée en ce que** l'interface haptique comprend également :

   - des moyens pour détecter le couple exercé par un utilisateur sur l'élément d'interaction (1) avec l'utilisateur, dans le cas d'un élément d'interaction avec l'utilisateur mobile en rotation, afin de connaître le sens du couple et si le couple est supérieur à une valeur donnée pour un sens donné, l'unité de commande commandant le système de génération (6) dudit stimulus sur la base des informations obtenues sur le couple au moins lorsqu'une vitesse nulle, ou une vitesse au moins inférieure à une valeur en dessous de laquelle on considère que le déplacement du bouton est imperceptible, de l'élément d'interaction (1) avec l'utilisateur est détectée, ou
   - des moyens pour détecter l'effort exercé par un utilisateur sur l'élément d'interaction (1) avec l'utilisateur, dans le cas d'un élément d'interaction avec l'utilisateur mobile en translation, afin de connaître le sens de la force et si la force est supérieure à une valeur donnée pour un sens donné, l'unité de commande commandant le système de génération (6) dudit stimulus sur la base des informations obtenues sur la force au moins lorsqu'une vitesse nulle, ou une vitesse au moins inférieure à une valeur en dessous de laquelle on considère que le déplacement du bouton est imperceptible de l'élément d'interaction (1) avec l'utilisateur est détectée.

2. Interface haptique selon la revendication 1, dans laquelle les moyens pour détecter le couple ou la force appliqué par l'utilisateur sur l'élément d'interaction avec l'utilisateur comportent au moins un capteur d'effort (40.1, 40.2, 240.1, 240.2), préférentiellement monté en précontrainte.

3. Interface haptique selon la revendication 2, dans laquelle les moyens pour détecter le couple ou la force appliqué par l'utilisateur sur l'élément d'interaction avec l'utilisateur comportent deux capteurs d'effort (40.1, 40.2, 240.1, 240.2), disposés de sorte qu'un capteur d'effort détecte un effort lorsque le couple ou la force est appliquée dans le premier sens et l'autre capteur d'effort détecte un effort lorsque le couple ou la force est appliquée dans le deuxième sens.

4. Interface haptique selon la revendication 1, dans laquelle les moyens pour détecter le couple ou la force appliqué par l'utilisateur sur l'élément d'interaction avec l'utilisateur comportent au moins un capteur de la déformation provoquée par le couple ou la force à l'un des éléments de l'interface haptique.

5. Interface haptique selon la revendication 4, dans laquelle les moyens pour détecter le couple ou la force appliqué par l'utilisateur sur l'élément d'interaction avec l'utilisateur comportent deux capteurs de la déformation provoquée par le couple ou la force à l'un des éléments de l'interface haptique, lesdits capteurs de déformation étant disposés de sorte qu'un capteur de déformation détecte la déformation lorsque le couple ou la force est appliqué dans le premier sens et l'autre capteur de déformation détecte une déformation lorsque le couple ou la force est appliqué dans le deuxième sens.

6. Interface haptique selon l'une des revendications 1 à 5, comportant un corps d'épreuve (26, 126, 226) qui est disposé de sorte à être déformé par le couple ou la force appliqué par l'utilisateur sur l'élément d'interaction (1) avec l'utilisateur, les moyens pour détecter le couple ou la force étant en contact avec ledit corps d'épreuve (26, 126, 226), le corps d'épreuve (26, 126, 226) étant avantageusement en un matériau tel que sa déformation n'est pas perceptible par l'utilisateur.

7. Interface haptique et la revendication 6 en combinaison avec la revendication 2 ou 3, dans laquelle le ou les capteurs d'effort (40.1, 40.2., 240.1, 240.2) est ou sont en contact ponctuel avec le corps d'épreuve.

8. Interface haptique selon la revendication 6 ou 7, comportant un bâti (16, 216) sur lequel sont fixés des moyens pour détecter le couple ou la force, le corps d'épreuve (26, 126, 226) étant d'une part solidaire du frein et d'autre part solidaire du bâti (16, 216) de sorte à être déformer lorsqu'un couple ou une force est appliquée à l'élément d'interaction (1) avec l'utilisateur.

9. Interface haptique selon l'une des revendications 1 à 8, dans laquelle l'élément d'interaction (1) avec l'utilisateur est mobile en rotation et est solidaire d'un arbre de rotation (2) d'axe longitudinal (X) duquel est solidaire en rotation l'élément d'interaction (12) avec le fluide, le couple de rotation étant déterminé.

10. Interface haptique selon les revendications 9, dans laquelle le frein comporte un boîtier cylindrique de section circulaire coaxial à l'axe de l'arbre de rotation (2), le corps d'épreuve (26, 126) étant cylindrique de section circulaire coaxial et disposé autour du boîtier de manière coaxial et dans lequel le ou les capteurs d'effort (40.1, 40.2) ou le ou les capteurs de déformation sont disposés sur un cercle centré sur l'axe de rotation de l'arbre de rotation (2).

11. Interface haptique selon l'une des revendications 1 à 8, dans laquelle l'élément d'interaction (1) avec l'utilisateur est mobile en translation.

12. Interface haptique selon l'une des revendications 1 à 11, dans laquelle le fluide est un fluide magnétorhéologique, le stimulus étant un champ magnétique.

13. Procédé de commande d'une interface haptique selon l'une des revendications 1 à 12 comportant les étapes:

   - détermination de la vitesse de l'élément d'interaction avec l'utilisateur à partir des informations fournies pas les moyens de mesure de la position courante sur de l'élément d'interaction avec l'utilisateur,
   - détermination du couple ou d'une force appliquée à l'élément d'interaction avec l'utilisateur,
   - détermination de la position courante de l'élément d'interaction avec l'utilisateur,
   - si la vitesse est supérieure à une vitesse donnée, le sens de rotation est celui donné par la vitesse et le système de génération d'un stimulus est commandé de sorte à appliquer le motif haptique enregistré pour la position courante déterminée et pour le sens de rotation déterminé,
   - si la vitesse est inférieure à une vitesse donnée et si le couple ou la force est supérieur à une valeur seuil positive ou inférieur à une valeur seuil négative, le sens de déplacement de l'élément d'interaction avec l'utilisateur est déduit du couple ou de la force déterminé, et le système de génération d'un stimulus est commandé de sorte à appliquer un stimulus en fonction du motif haptique enregistré pour cette position courante et pour le sens de déplacement déduit.

14. Procédé selon la revendication 13, dans lequel lorsque le couple ou la force déterminé est inférieur à une valeur donnée, aucun stimulus n'est appliqué au fluide.


**Patentansprüche**

1. Haptische Schnittstelle, umfassend:

   - ein Element zur Interaktion (1) mit einem Benutzer, welches in der Lage ist, sich in einem ersten Sinn und in einem zweiten Sinn zu verlagern,

- ein Element zur Interaktion (12) mit einem Fluid, dessen Viskosität als Funktion einer externen Anregung variiert, wobei das Element zur Interaktion (12) mit dem Fluid wenigstens in Translation oder wenigstens in Rotation mit dem Element zur Interaktion (1) mit dem Benutzer verbunden ist,
- Mittel zum Messen einer momentanen Position (14) des Elements zur Interaktion (1) mit dem Benutzer,
- eine Bremse, umfassend ein Fluid, dessen anscheinende Viskosität als Funktion einer externen Anregung variiert, und ein System zum Erzeugen (6) der Anregung auf Anweisung in dem Fluid, wobei das Element zur Interaktion (12) mit dem Fluid in dem Fluid angeordnet ist,
- eine Anweisungseinheit, welche in der Lage ist, Befehle für das System zum Erzeugen der Anregung zum Modifizieren des Werts der Anregung zu erzeugen,

**dadurch gekennzeichnet, dass** die haptische Schnittstelle ferner umfasst:

- Mittel zum Detektieren des Drehmoments, welches durch einen Benutzer auf das Element zur Interaktion (1) mit dem Benutzer ausgeübt wird, wobei in dem Fall, dass ein Element zur Interaktion mit dem Benutzer in Rotation beweglich ist, zum Erkennen des Sinns des Drehmoments und wenn das Drehmoment größer als ein gegebener Wert in einem gegebenen Sinn ist, die Anweisungseinheit das System zum Erzeugen (6) der Erregung auf der Grundlage von Informationen anweist, welche über das Drehmoment erhalten worden sind, wenigstens wenn eine Geschwindigkeit null oder eine Geschwindigkeit wenigstens kleiner einem Wert, unterhalb welchem die Verlagerung des Knopfs als nicht wahrnehmbar angesehen wird, des Elements zur Interaktion (1) mit dem Benutzer detektiert wird, oder
- Mittel zum Detektieren der Last, welche von einem Benutzer auf das Element zur Interaktion (1) mit dem Benutzer ausgeübt wird, in dem Fall, dass ein Element zur Interaktion mit dem Benutzer in Translation beweglich ist, zum Erkennen des Sinns der Kraft und wenn die Kraft größer als ein gegebener Wert in einem gegebenen Sinn ist, wobei die Anweisungseinheit das System zum Erzeugen (6) der Anregung auf der Grundlage von Informationen anweist, welche über die Kraft erhalten worden sind, wenigstens wenn eine Geschwindigkeit null oder eine Geschwindigkeit wenigstens kleiner einem Wert, unterhalb welchem die Verlagerung des Knopfs als nicht wahrnehmbar angesehen wird, des Elements zur Interaktion (1) mit dem Benutzer detektiert wird.

2. Haptische Schnittstelle nach Anspruch 1, wobei die Mittel zum Detektieren des Drehmoments oder der Kraft, welches/welche von dem Benutzer auf das Element zur Interaktion mit dem Benutzer ausgeübt wird, wenigstens einen Lastsensor (40.1, 40.2, 240.1, 240.2) umfassen, vorzugsweise in Vorspannung.

3. Haptische Schnittstelle nach Anspruch 2, wobei die Mittel zum Detektieren des Drehmoments oder der Kraft, welches/welche von dem Benutzer auf das Element zur Interaktion mit dem Benutzer ausgeübt wird, zwei Lastsensoren (40.1, 40.2, 240.1, 240.2) umfassen, welche derart angeordnet sind, dass ein Lastsensor eine Last detektiert, wenn das Drehmoment oder die Kraft in dem ersten Sinn ausgeübt wird, und der andere Lastsensor eine Last detektiert, wenn das Drehmoment oder die Kraft in dem zweiten Sinn ausgeübt wird.

4. Haptische Schnittstelle nach Anspruch 1, wobei die Mittel zum Detektieren des Drehmoments oder der Kraft, welches/welche von dem Benutzer auf das Element zur Interaktion mit dem Benutzer ausgeübt wird, wenigstens einen Verformungssensor umfassen, welcher durch das Drehmoment oder die Kraft auf eines der Elemente der haptischen Schnittstelle gereizt wird.

5. Haptische Schnittstelle nach Anspruch 4, wobei die Mittel zum Detektieren des Drehmoments oder der Kraft, welches/welche von dem Benutzer auf das Element zur Interaktion mit dem Benutzer ausgeübt wird, zwei Verformungssensoren umfassen, welche durch das Drehmoment oder die Kraft auf eines der Elemente der haptischen Schnittstelle gereizt werden, wobei die Verformungssensoren derart angeordnet sind, dass ein Verformungssensor die Verformung detektiert, wenn das Drehmoment oder die Kraft in dem ersten Sinn ausgeübt wird, und der andere Verformungssensor eine Verformung detektiert, wenn das Drehmoment oder die Kraft in dem zweiten Sinn ausgeübt wird.

6. Haptische Schnittstelle nach einem der Ansprüche 1 bis 5, umfassend einen Probenkörper (26, 126, 226), welcher derart angeordnet ist, dass er durch das Drehmoment oder die Kraft, welches/welche von dem Benutzer auf das Element zur Interaktion (1) mit dem Benutzer ausgeübt wird, deformiert wird, wobei die Mittel zum Detektieren des Drehmoments oder der Kraft in Kontakt mit dem Probenkörper (26, 126, 226) sind, wobei der Probenkörper (26, 126, 226) vorteilhafterweise aus einem derartigen Material ist, dass seine Verformung von dem Benutzer nicht wahrnehmbar ist.

**7.** Haptische Schnittstelle nach Anspruch 6 in Kombination mit Anspruch 2 oder 3, wobei der oder die Lastsensoren (40.1, 40.2, 240.1, 240.2) in punktuellem Kontakt mit dem Probenkörper ist oder sind.

**8.** Haptische Schnittstelle nach Anspruch 6 oder 7, umfassend ein Gestell (16, 216), an welchem die Mittel zum Detektieren des Drehmoments oder der Kraft befestigt sind, wobei der Probenkörper (26, 126, 226) derart einerseits mit der Bremse verbunden ist und andererseits mit dem Gestell (16, 216) verbunden ist, dass er verformt wird, wenn ein Drehmoment oder eine Kraft auf das Element zur Interaktion (1) mit dem Benutzer ausgeübt wird.

**9.** Haptische Schnittstelle nach einem der Ansprüche 1 bis 8, wobei das Element zur Interaktion (1) mit dem Benutzer in Rotation beweglich ist und mit einer Rotationswelle (2) mit longitudinaler Achse (X) verbunden ist, mit welcher das Element zur Interaktion (12) mit dem Fluid in Rotation verbunden ist, wobei das Drehmoment der Rotation bestimmt wird.

**10.** Haptische Schnittstelle nach Anspruch 9, wobei die Bremse ein zylindrisches Gehäuse mit kreisförmigem Querschnitt koaxial zu der Rotationswelle (2) umfasst, wobei der Probenkörper (26, 126) zylindrisch mit kreisförmigem Querschnitt koaxial mit dem Gehäuse und derart darum herum in koaxialer Weise angeordnet ist, und wobei der oder die Lastsensoren (40.1, 40.2) oder der oder die Verformungssensoren auf einem Kreis angeordnet sind, welcher auf der Rotationsachse der Rotationswelle (2) zentriert ist.

**11.** Haptische Schnittstelle nach einem der Ansprüche 1 bis 8, wobei das Element zur Interaktion (1) mit dem Benutzer in Translation beweglich ist.

**12.** Haptische Schnittstelle nach einem der Ansprüche 1 bis 11, wobei das Fluid ein magnetorheologisches Fluid ist, wobei die Anregung ein magnetisches Feld ist.

**13.** Verfahren zum Anweisen einer haptischen Schnittstelle nach einem der Ansprüche 1 bis 12, umfassend die Schritte:

- Bestimmen der Geschwindigkeit des Elements zur Interaktion mit dem Benutzer ausgehend von Informationen, welche von den Mitteln zum Messen der momentanen Position an dem Element zur Interaktion mit dem Benutzer bereitgestellt werden,
- Bestimmen eines Drehmoments oder einer Kraft, welche auf das Element zur Interaktion mit dem Benutzer ausgeübt wird,
- Bestimmen der momentanen Position des Elements zur Interaktion mit dem Benutzer,
- wenn die Geschwindigkeit größer als eine gegebene Geschwindigkeit ist, ist der Rotationssinn derjenige, welcher durch die Geschwindigkeit gegeben ist, und das System zum Erzeugen einer Anregung wird dazu angewiesen, das haptische Motiv anzuwenden, welches für die bestimmte momentane Position und für den bestimmten Rotationssinn gespeichert ist,
- wenn die Geschwindigkeit kleiner als eine gegebene Geschwindigkeit ist und wenn das Drehmoment oder die Kraft größer als ein positiver Schwellenwert oder kleiner als ein negativer Schwellenwert ist, wird der Sinn der Verlagerung des Elements zur Interaktion mit dem Benutzer aus dem bestimmten Drehmoment oder der bestimmten Kraft abgeleitet, und das System zur Erzeugung einer Anregung wird derart angewiesen, dass eine Anregung als Funktion des haptischen Motiv ausgeübt wird, welches für diese momentane Position und für den abgeleiteten Verlagerungssinn gespeichert ist.

**14.** Verfahren nach Anspruch 13, wobei wenn das bestimmte Drehmoment oder die bestimmte Kraft kleiner ist als ein gegebener Wert keine Anregung auf das Fluid ausgeübt wird.

## Claims

**1.** Haptic interface comprising:

- an interaction element (1) for interacting with a user suitable for moving in a first direction and in a second direction,
- an interaction element (12) for interacting with a fluid, the viscosity whereof varies according to an external stimulus, the interaction element (12) for interacting with the fluid being secured at least in translation or at least in rotation with the interaction element (1) for interacting with the user,
- means for measuring a current position (14) of the interaction element (1) for interacting with the user,

- a brake comprising a fluid, the viscosity whereof varies according to an external stimulus, and a generation system (6) for generating said stimulus on command in said fluid, the interaction element (12) for interacting with the fluid being arranged in the fluid,
- a control unit suitable for generating orders to said system for generating said stimulus to modify the stimulus value,

**characterized in that** the haptic interface also comprises:

- means for detecting the torque applied by a user on the interaction element (1) for interacting with the user, in the case of a rotatable element for interacting with the user, in order to determine the direction of the torque and whether the torque is greater than a given value for a given direction, the control unit controlling the generation system (6) for generating said stimulus on the basis of the information obtained on the torque at least when a zero speed or a speed at least less than a value below which the movement of the button is considered to be imperceptible, of the interaction element (1) for interacting with the user is detected, or
- means for detecting the load applied by a user on the interaction element (1) for interacting with the user, in the case of a translatable element for interacting with the user, in order to determine the direction of the force and whether the force is greater than a given value for a given direction, the control unit controlling the generation system (6) for generating said stimulus on the basis of the information obtained on the force at least when a zero speed or a speed at least less than a value below which the movement of the button is considered to be imperceptible, of the interaction element (1) for interacting with the user is detected.

2.   Haptic interface according to claim 1, wherein the means for detecting the torque or force applied by the user to the element for interacting with the user comprise at least one load sensor (40.1, 40.2, 240.1, 240.2), preferentially mounted pre-stressed.

3.   Haptic interface according to claim 2, wherein the means for detecting the torque or force applied by the user to the element for interacting with the user comprise two load sensors (40.1, 40.2, 240.1, 240.2), arranged such that one load sensor detects a load when the torque or force is applied in the first direction and the other load sensor detects a load when the torque or force is applied in the second direction.

4.   Haptic interface according to claim 1, wherein the means for detecting the torque or force applied by the user to the element for interacting with the user comprise at least one sensor of the strain induced by the torque or force to one of the elements of the haptic interface.

5.   Haptic interface according to claim 4, wherein the means for detecting the torque or force applied by the user to the element for interacting with the user comprise two sensors of the strain induced by the torque or force to one of the elements of the haptic interface, said strain sensors being arranged such that one strain sensor detects the strain when the torque or force is applied in the first direction and the other strain sensor detects a strain when the torque or force is applied in the second direction.

6.   Haptic interface according to any one of claims 1 to 5, comprising a proof body (26, 126, 226) which is arranged so as to be strained by the torque or force applied by the user to the interaction element (1) for interacting with the user, the means for detecting the torque or force being in contact with said proof body (26, 126, 226), the proof body (26, 126, 226) being advantageously made of a material such that the strain thereof is not perceptible by the user.

7.   Haptic interface according to claim 6 in combination with claim 2 or 3, wherein the load sensor(s) (40.1, 40.2., 240.1, 240.2) is or are in point contact with the proof body.

8.   Haptic interface according to claims 6 or 7, comprising a frame (16, 216) whereon are mounted means for detecting the torque or force, the proof body (26, 126, 226) being on one hand secured to the brake and on the other secured to the frame (16, 216) so as to be strained when a torque or force is applied to the interaction element (1) for interacting with the user.

9.   Haptic interface according to any one claims 1 to 8, wherein the interaction element (1) for interacting with the user is rotatable and is secured to a rotary shaft (2) the longitudinal axis (X) whereof the interaction element (12) for interacting with the fluid is secured in rotation, the rotational torque being determined.

10.  Haptic interface according to claims 9, wherein the brake comprises a cylindrical housing having a circular cross-section coaxial with the axis of the rotary shaft (2), the proof body (26, 126) being cylindrical with a coaxial circular cross-section and arranged coaxially about the housing and wherein the load sensor(s) (40.1, 40.2) or the strain sensor(s) are arranged on a circle centred on the axis of rotation of the rotary shaft (2).

11. Haptic interface according to any one of claims 1 to 8, wherein the interaction element (1) for interacting with the user is translatable.

12. Haptic interface according to any one of claims 1 to 11, wherein the fluid is a magnetorheological fluid, the stimulus being a magnetic field.

13. Method for controlling a haptic interface according to any one of claims 1 to 12, comprising the following steps:

- determining the speed of the element for interacting with the user on the basis of the information provided by the means for measuring the current position on the element for interacting with the user,
- determining the torque or force applied to the element for interacting with the user,
- determining the current position of the element for interacting with the user,
- if the speed is greater than a given speed, the direction of rotation is that given by the speed and the system for generating a stimulus is controlled so as to apply the haptic pattern recorded for the current position determined and for the direction of rotation determined,
- if the speed is less than a given speed and if the torque or force is greater than a positive threshold value or less than a negative threshold value, the direction of movement of the element for interacting with the user is inferred from the torque or force determined, and the system for generating a stimulus is controlled so as to apply a stimulus according to the haptic pattern recorded for this current position and for the direction of movement inferred.

14. Method according to claim 13, wherein, when the torque or force determined is less than a given value, no stimulus is applied to the fluid.

FIG.1

FIG.2

FIG.3

FIG.4

FIG.5

201

204

226

216

$I_2$

228  232

230

FIG.6A

230

226

232

228

FIG.6B

226

232

216

230

216

226

240.1  240.2

FIG.6C

FIG.7

FIG.8

FIG.9

FIG.10

FIG.11

FIG.12

**EP 3 201 725 B1**

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

### Documents brevets cités dans la description

- US 20060280575 A
- FR 2930655